# EUROPEAN PATENT APPLICATION

(11) **EP 2 846 018 A1**
(43) Date of publication of application: **11.03.2015**
(21) Application number: 13183717.1
(22) Date of filing: 10.09.2013
(51) Int. Cl.: F01P 5/12, F04D 13/02, F16D 27/11

(54) **Switchable mechanical automotive coolant pump**

(71) Applicant: Pierburg Pump Technology GmbH, 41460 Neuss (DE)
(72) Inventor: Bruant, Sebastien, 57420 Pommérieux (FR); Rybicki, Gilles, 57000 Metz (FR); Dattoli, Emmanuel, 57420 Pommérieux (FR); Finidori, Laurent, 57310 BERTRANGE (FR); Defossez, Kevin, 57050 Longeville-Lès-Metz (FR)
(74) Representative: Patentanwälte ter Smitten Eberlein Rütten Partnerschaftsgesellschaft

(57) **Abstract**

The invention refers to a switchable mechanical automotive coolant pump (10) comprising
a pump rotor (60) including a pump wheel (18) for pumping the coolant liquid,
a pulley wheel (40) arranged to be mechanically driven by an automotive engine, and
an electromagnetic friction clutch arrangement with a dry friction clutch (50) for connecting or disconnecting the pulley wheel (40) and the pump rotor (60), and
an electromagnet (30) switching the friction clutch (50) between an engaged and a disengaged state. The friction clutch (50) comprises a pulley-sided conical friction surface (52) and a corresponding rotor-sided conical friction surface (54). The conical design of the friction clutch 50 allows a compact coolant pump design.

## Description

The invention refers to a mechanical automotive coolant pump with a dry friction clutch which is switched by an electromagnet.

A mechanical automotive coolant pump is mechanically driven by an internal combustion engine via a mechanical transmission means, for example by a pulley belt. Therefore, the rotor of the coolant pump can only rotate with a rotational speed proportional to the rotational speed of the engine. As long as the engine is cold, no or no relevant coolant flow is needed so that no rotation of the coolant pump rotor is needed. The coolant pump is provided with a friction clutch which is actuated by an electromagnet so that the friction clutch can be engaged and disengaged as needed.

EP 2 351 918 A1 discloses a switchable mechanical coolant pump with a friction clutch which is switched by an electromagnet. The friction clutch is provided with cooperating friction ring surfaces lying in a radial plane. One friction surface is provided axially shiftable. For ensuring the needed transmission torque of the engaged clutch the shiftable friction surface must be pushed against the other friction surface with a relatively high axial force which has to be generated by a spring or by the electromagnet counteracting against a spring. As a consequence, the electromagnet has to be dimensioned accordingly, needs equivalent electric energy to be activated and generates corresponding heat energy when activated. The diameter of the friction ring surface has to be relatively high to provide a large total friction surface to generate a high total friction value.

It is an object of the invention to provide a compact switchable mechanical automotive coolant pump.

This object is achieved with a switchable mechanical automotive coolant pump with the features of claim 1.

The mechanical coolant pump is provided with a pump rotor which is provided with a pump rotor wheel pumping the coolant axially flowing into the pump rotor wheel radially outwardly. The pump is provided with a rotor shaft which supports the pump wheel co-rotating with the rotor shaft. The pump is also provided with a pulley wheel which is mechanically driven by the automotive engine of the vehicle. The mechanical transmission between the engine and the pump can be provided, for example, by a pulley belt.

For connecting and disconnecting the pulley wheel and the pump rotor an electromagnetic friction clutch arrangement is provided. The friction clutch arrangement is provided with a dry friction clutch and with an electromagnet for switching the friction clutch between the engaged and disengaged state. The friction clutch comprises a pulley-sided conical friction surface and a corresponding rotor-sided conical friction surface. The terms pulley-sided and rotor-sided are understood as being mechanically connected to the corresponding side but are not understood as being geometrically arranged at a particular side.

The friction clutch is provided with a pair of corresponding and conical friction surfaces. This arrangement allows to provide a high total friction surface without significantly increasing the total diameter of the friction surfaces. The more conical the friction surface is arranged the less axial engagement force is necessary to ensure the needed transmission torque because of the wedge effect of the conical friction surfaces. Since the axial engagement force can be reduced, the nominal magnetic performance of the electromagnet can be reduced accordingly. As a consequence, the size, the electric consumption as well as the heat generation of the electromagnet is reduced accordingly.

Preferably, the close cone angle of the friction surfaces with respect to the longitudinal rotor axis is less than 75°, and is preferably less than 45°. The positive effect of the conical friction surfaces is the higher the more conical the friction surfaces are arranged, i.e. the smaller the cone angle is. However, the conicity should not be too high to avoid a jamming of the friction surfaces in the engaged state which would make a reliable disengagement of the friction clutch difficult if not impossible.

According to a preferred embodiment of the invention one of the friction surfaces is axially movable and a clutch spring is provided which forces the movable friction surface into the engaged state position. If the electromagnet should fail, the friction clutch remains in or is switched into the engaged state so that the pulley wheel and the pump rotor become or remain mechanically engaged. This arrangement makes the coolant pump failsafe.

Preferably the engaged state position of the movable friction surface is the axially distal position, whereas the friction surface in the disengaged state position is in the axially proximal position. This arrangement ensures that the axial movement range of the movable friction surface is limited by the other friction surface so that the movable friction surface cannot be lost and the clutch spring cannot be overstretched accidentally.

According to a preferred embodiment of the invention, one friction surface is defined by a radially inner surface of a portion of the pulley wheel. The pulley wheel body is provided with an integral portion which defines the conical and ring-like friction surface orientated radially inwardly to the center.

Preferably, the outer diameter of the clutch surfaces is less than the outer diameter of the pulley portion of the pulley wheel. Since the total friction surface of the conical clutch depends more on the axial length of the friction surfaces than on the radial extension, the diameter of the friction surfaces can be relatively small so that the coolant pump can be designed very compact.

According to a preferred embodiment of the invention, the pulley wheel is supported by a pulley wheel bearing at a stationary pump frame. The outer diameter of the clutch surfaces is less than the outer diameter of the pulley wheel bearing. The total friction surface of the conical clutch can be increased significantly by increasing the axial extension of the conical friction surfaces so that the radial extension of the friction clutch can be reduced accordingly. This allows to reduce the radial diameter of the clutch surfaces to be below the outer diameter of the pulley wheel bearing so that a compact coolant pump can be realized.

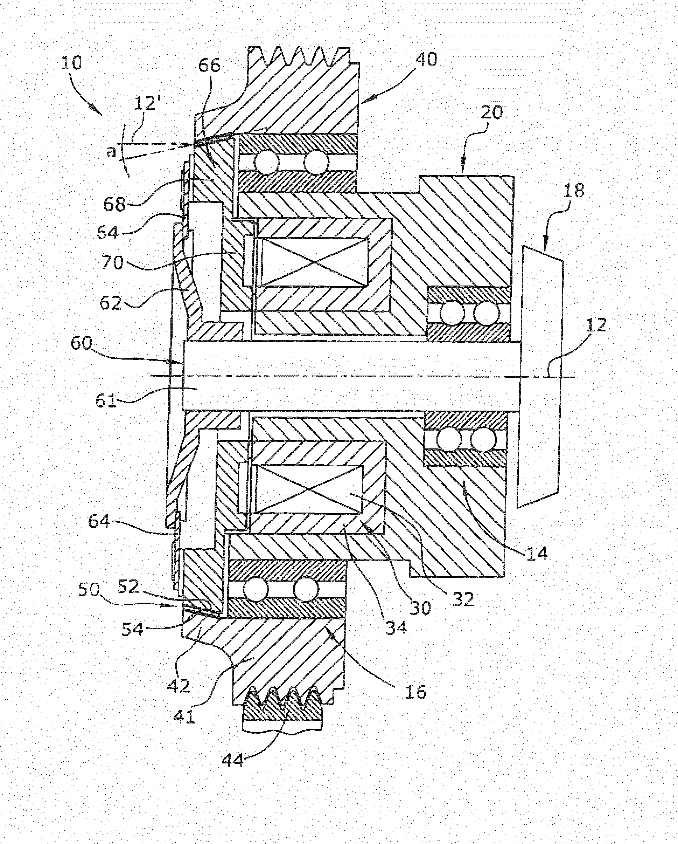

One embodiment of the invention is described with reference to the drawing, wherein the figure shows a longitudinal cross section of a switchable mechanical automotive coolant pump.

The figure shows the longitudinal cross section of a switchable mechanical automotive coolant pump 10 which can be driven by an automotive engine (not shown) via a pulley belt 44. The coolant pump 10 pumps a liquid coolant to the engine and is driven with a rotational speed which is proportional to the rotational speed of the engine.

The coolant pump 10 is provided with a metal pump frame 20 which can be fixed to the engine's body and which can be made out of aluminium. The coolant pump 10 is provided with a rotatable pump rotor 60 which is a plastic impeller pump wheel 18 with an axial coolant inlet and a radial coolant outlet. The pump wheel 18 is co-rotatably supported by a metal rotor shaft 61 which is rotatably supported at the pump frame 20 by a rotor roller bearing 14. The rotor shaft 61 axially projects through the complete pump frame 20 and defines the longitudinal rotor axis 12. The pump wheel 18 is fixed to the proximal longitudinal end of the rotor shaft 61.

The pump frame 20 is provided with a ring-like electromagnet 30 in a corresponding ring-like cavity at the distal longitudinal end of the pump frame 20. The electromagnet 30 comprises a ring coil 32 within a magnetic conduction body 34 which is U-shaped in cross-section and is open at its distal end.

A rotor-sided clutch part 66 is co-rotatably supported at the distal end of the rotor shaft 61. The rotor-sided clutch part 66 comprises a metal hub disk 62 which is directly and co-rotatably fixed to the rotor shaft 61, a radial clutch spring 64 fixed to the metal hub disk 62 and holding an axially movable clutch body 68 made out of a ferromagnetic metal. The radial clutch spring 64 can be realized as a single ring-like disk spring or can be realized by several radial spring strips. However, the clutch spring

64 forces the movable clutch body 68 axially in the distal direction into the engaged state position. The movable clutch body 68 is provided with a ring-like actuation portion 70 which is arranged integral with and radially inside of the clutch body 68. The actuation portion 70 is arranged axially opposite to the electromagnet 30.

Radially outside of the pump frame 20 at its distal end a pulley wheel 40 is arranged which is rotatably supported by a pulley roller bearing 16 at the pump frame 20. The pulley wheel 40 integrally comprises a pulley portion 41 and a clutch portion 42 axially distal of the pulley portion 41. The radial inside surface of the clutch portion 42 defines a conical friction surface 52.

The radial outside surface of the clutch body 68 defines a conical friction surface 54 which is rotor-sided and which corresponds with the rotor-sided conical friction surface 54. Both conical friction surfaces 52, 54 have the same cone angle (a) with respect to the longitudinal rotor axis 12,12' of about 20°. Both conical friction surfaces 52, 54 are coated with a friction coating increasing the friction value of the pair of friction surfaces 52, 54. The two friction surfaces 52, 54 both together define a dry friction clutch 50 for connecting or disconnecting the pulley wheel 40 and the pump rotor 60. The electromagnet 30, the pulley wheel 14 including the clutch section 42 and the complete rotor-sided clutch part 66 together define an electromagnetic friction clutch arrangement.

When the electromagnet 30 is not electrically activated, the clutch spring 64 pulls the rotor-sided clutch body 68 axially in distal direction so that the rotor-sided friction surface 54 is radially pressed against the pulley-sided friction surface 52 with a relatively high radial force which causes relatively high friction forces in tangential/circumferential direction. When the electromagnet 30 is electrically activated, the ring coil 32 generates a toroidal magnetic field which is led and concentrated by the conduction body 34 in axial distal directions so that the ferromagnetic rotor-sided clutch part 66 is axially attracted and shifted in proximal direction which causes a disengagement of the friction clutch 50.

## Claims

1. A switchable mechanical automotive coolant pump (10) comprising
a pump rotor (60) including a pump wheel (18) for pumping the coolant liquid,
a pulley wheel (40) arranged to be mechanically driven by an automotive engine, and
an electromagnetic friction clutch arrangement with a dry friction clutch (50) for connecting or disconnecting the pulley wheel (40) and the pump rotor (60), and
an electromagnet (30) switching the friction clutch (50) between an engaged and a disengaged state,
wherein the friction clutch (50) comprises a pulley-sided conical friction surface (52) and a corresponding rotor-sided conical friction surface (54).

2. The switchable mechanical automotive coolant pump (10) of claim 1, wherein the cone angle (a) of the friction surfaces (52, 54) with respect to the longitudinal rotor axis (12) is less than 75°, preferably less than 45°.

3. The switchable mechanical automotive coolant pump (10) of one of the preceding claims, wherein one of the friction surfaces (54) is axially movable and a clutch spring (64) is provided which forces the movable friction surface (54) into the engaged state position.

4. The switchable mechanical automotive coolant pump (10) of one of the preceding claims, wherein the engaged state position of the movable friction surface (54) is the axially distal position.

5. The switchable mechanical automotive coolant pump (10) of one of the preceding claims, wherein one friction surface (52) is defined by a radially inner surface of a portion (42) of the pulley wheel (40).

6. The switchable mechanical automotive coolant pump (10) of one of the preceding claims, wherein the outer diameter of the clutch surface is (52, 54) is less than the outer diameter of the pulley portion (41) of the pulley wheel (40).

7. The switchable mechanical automotive coolant pump (10) of one of the preceding claims, wherein the pulley wheel (40) is supported by a pulley wheel bearing (16) at a stationary pump frame (20) and the outer diameter of the clutch surfaces (52, 54) is less than the outer diameter of the pulley wheel bearing (16).
